# NEUE EUROPÄISCHE PATENTSCHRIFT

(11) **EP 2 067 940 B2**
(45) Veröffentlichungstag und Bekanntmachung des Hinweises auf die Entscheidung über den Einspruch: **15.02.2023**
(45) Hinweis auf die Patenterteilung: 02.10.2019
(21) Anmeldenummer: 08162627.7
(22) Anmeldetag: 19.08.2008
(51) Int. Cl.: F01K 23/10, F22B 1/18

(54) **Verfahren zum Betrieb eines Kombikraftwerks sowie Kombikraftwerk zur Durchführung des Verfahrens**
Method for operating a combined cycle power plant, and also combined-cycle power plant for carrying out the method
Procédé de fonctionnement d'ne centrale à cycle combiné, et centrale à cycle combiné pour la mise en oeuvre dudit procédé

(30) Priorität: 07.09.2007 CH 14062007
(43) Veröffentlichungstag der Anmeldung: 10.06.2009
(73) Patentinhaber: General Electric Technology GmbH, 5400 Baden (CH)
(72) Erfinder: Oomens, Gijsbertus, 5415 Nussbaumen (CH); Ruchti, Christoph, Dr., 8610 Uster (CH); Droux, François, 5452 Oberrohrdorf (CH)
(74) Vertreter: Novagraaf Group

(56) Entgegenhaltungen:
- EP-A- 1 219 801
- EP-A- 1 262 638
- EP-A- 1 808 588
- EP-A1- 0 773 349
- WO-A-99/57421
- DE-C1- 10 032 625
- DE-C1- 19 832 294
- US-A- 4 362 013
- US-A- 5 267 434
- US-A1- 2005 044 859

## Beschreibung

### TECHNISCHES GEBIET

Die vorliegende Erfindung bezieht sich auf das Gebiet der Kraftwerkstechnik. Sie betrifft ein Verfahren zum Betrieb eines Kombikraftwerks gemäss dem Oberbegriff des Anspruchs 1 sowie ein Kombikraftwerk zur Durchführung des Verfahrens.

### STAND DER TECHNIK

Um den Wirkungsgrad von Kombikraftwerken zu erhöhen, werden im Stand der Technik die Gasturbinen mit hohen Verdichtungsverhältnissen gefahren. Bei bekannten Gasturbinen wie z. B. dem Typ GT26 des Anmelders wird aus dem Verdichter der Gasturbine komprimierte Luft abgezweigt, um die Brennkammer und Teile der Turbine zu kühlen. Die beim Verdichten entstehenden hohen Temperaturen der abgezweigten Luft erfordert eine Kühlung, bevor die komprimierte Luft (Druckluft) als Kühlluft eingesetzt werden kann. Die Druckluft kann beispielsweise in einem oder mehreren Durchlaufkühler(n) (Once Through Cooler OTC) heruntergekühlt werden. In einem Kombikraftwerk wird dazu Wasser aus dem Abhitzedampferzeuger abgezweigt und zum Durchlaufkühler geschickt, um dort die Druckluft zu kühlen. Während dieses Prozesses wird im Durchlaufkühler Dampf erzeugt. Der überhitzte Dampf aus dem Durchlaufkühler wird zum Abhitzedampferzeuger zurückgeführt.

Es wäre nun wünschenswert, zur Erhöhung der Verfügbarkeit und Flexibilität des Betriebs ein Kombikraftwerk so auszugestalten und zu betreiben, dass es sowohl in einer mit zwei Kreisläufen (Combined Cycle CC) arbeitenden Betriebsart, als auch in einer mit nur einem Kreislauf (Single Cycle SC) arbeitenden Betriebsart betrieben werden kann.

Wird ein Kombikraftwerk mit nur einem Kreislauf, dem Gasturbinenkreislauf, betrieben, bei welchem der Abhitzedampferzeuger nicht zur Verfügung steht, und wird das Kraftwerk von der einen Betriebsart in die andere überführt, ergeben sich die folgenden Probleme:
- Wie soll der Durchlaufkühler, insbesondere dessen Druck und Temperatur, gesteuert werden, wenn umgeschaltet wird?
- Wo soll bei der Betriebsart mit nur einem Kreislauf das Wasser für den Durchlaufkühler hergenommen werden?
- Was soll mit dem im Durchlaufkühler erzeugten Dampf geschehen?

Obgleich die Betriebsart mit zwei Kreisläufen vom Standpunkt des Wirkungsgrades für den Betreiber interessanter ist als die Betriebsart mit nur einem Kreislauf, kann die letztere Bedeutung erlangen, wenn der Betreiber mehr Flexibilität beim Betrieb der Anlage und eine bessere Verfügbarkeit haben möchte, ohne dass die gesamte Anlage abgeschaltet werden muss. Die Betriebsart mit nur einem Kreislauf kann auch nützlich sein, wenn zunächst ein Kraftwerk mit nur einem Kreislauf errichtet wird, das später zu einem Kombikraftwerk erweitert wird.

Dokument EP 1219801 A offenbartein Kombikraftwerk mit einem Nebenkamin für Gasturbinenabgase, das sowohl im Einfachbetrieb als auch im Kombibetrieb gefahren werden kann.

Dokument WO99/57421 A offenbart ein Kombikraftwerk mit einem an den Wasser-Dampf-Kreislauf angeschlossenen Verdampfer zur Kühlung von Kühlluft für die Gasturbine.

### DARSTELLUNG DER ERFINDUNG

Es ist Aufgabe der Erfindung, eine Betriebsverfahren für ein Kombikraftwerk anzugeben sowie ein Kombikraftwerk zur Durchführung des Verfahrens zu schaffen, welche die Flexibilität beim Betrieb der Anlage erhöhen und eine bessere Anlagenverfügbarkeit zur Folge haben.

Die Aufgabe wird durch die Gesamtheit der Merkmale der unabhängigen Ansprüche gelöst.

Das beanspruchte Verfahren ist dadurch gekennzeichnet, dass beim Umschalten von einer zweiten Betriebsart (Kombibetrieb), bei der der Garturbinenkreislauf und der Wasser/Dampfkreislauf zur Energieerzeugung eingesetzt werden, zu einer ersten Betriebsart (Einfachbetrieb), bei der nur der Gasturbinenkreislauf zur Energieerzeugung eingesetzt wird, die heissen Abgase aus der Gasturbine sukzessive von dem Abhitzedampferzeuger weg in einen Nebenkamin umgeleitet werden, und umgekehrt, und dass zum Umleiten der heissen Abgase eine in dem von der Gasturbine zum Abhitzedampferzeuger führenden Abgaskanal angeordnete Umlenkklappe betätigt wird.

Vorzugsweise wird gleichzeitig die Abgabe von Dampf aus dem Durchlaufkühler an den Abhitzedampferzeuger zurückgefahren und der Dampf anderweitig verwendet wird, bzw. umgekehrt, wobei der vom Abhitzedampferzeuger abgezogene Dampf entweder in den Nebenkamin abgelassen oder der durch den Durchlaufkühler geführten Druckluft zugemischt oder einem luftgekühlten Kondensator zugeführt wird, um den Verlust an entmineralisiertem Wasser zu minimieren.

Gleichzeitig wird gemäss der vorliegend beanspruchten Erfindung auch die Zufuhr von Speisewasser aus dem Abhitzedampferzeuger zurückgefahren und durch eine anderweitige Zufuhr von Speisewasser ersetzt, bzw. umgekehrt, wobei in der Übergangsphase dem Speisewasser mittels einer separaten Kaltwassermischleitung kaltes Wasser zugemischt wird.

Insbesondere wird die Zufuhr von Speisewasser aus dem Abhitzedampferzeuger mittels eines in einer Speisewasser-Bypassleitung angeordneten Regelventils zurückgefahren, nachdem die Versorgung des Durchlaufkühlers mit dem Speisewasser auf die Speisewasser-Bypassleitung umgeschaltet worden ist, bzw. umgekehrt.

Zur anderweitigen Zufuhr von Speisewasser wird gemäss der vorliegend beanspruchten Erfindung ein separates Ein-Zyklus-Speisewassersystem herangezogen.

Eine Ausgestaltung des Kombikraftwerks nach der Erfindung zeichnet sich dadurch aus, dass zum Umleiten der heissen Abgase vom Abhitzedampferzeuger zum Nebenkamin im Abgaskanal eine Umlenkklappe angeordnet ist.

Insbesondere ist in der ersten Dampfableitung ein erstes Absperrventil angeordnet, und es zweigt von der ersten Dampfableitung vor dem ersten Absperrventil eine für die erste Betriebsart vorgesehene zweite Dampfableitung ab.

Gemäss einer Weiterbildung sind in der zweiten Dampfableitung hintereinander ein zweites Absperrventil und ein erstes Regelventil angeordnet.

Eine andere Ausgestaltung ist dadurch gekennzeichnet, dass in der ersten Speisewasserzuleitung ein drittes Absperrventil angeordnet ist, und dass zur Umgehung des dritten Absperrventils eine Speisewasser-Bypassleitung vorgesehen ist, in der hintereinander ein viertes Absperrventil und ein zweites Regelventil angeordnet sind, wobei in die erste Speisewasserleitung zwischen der Speisewasser-Bypassleitung und dem Durchflusskühler eine Kaltwassermischleitung einmündet, und in der Kaltwassermischleitung hintereinander ein fünftes Absperrventil und ein drittes Regelventil angeordnet sind.

Weiterhin ist es von Vorteil, wenn in die erste Speisewasserleitung zwischen der Speisewasser-Bypassleitung und dem Durchflusskühler eine von einem separaten Ein-Zyklus-Speisewassersystem kommende zweite Speisewasserleitung einmündet, und in der zweiten Speisewasserleitung ein sechstes Absperrventil angeordnet ist.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- **Fig. 1**: einen Teilaspekt eines Kombikraftwerks für die Durchführung des erfindungsgemässen Verfahrens mit einem einer Gasturbine nachgeschalteten Abhitzedampferzeuger und einem Nebenkamin zur Umlenkung der heissen Abgase;
- **Fig. 2**: einen weiteren Teilaspekt des Kombikraftwerks mit einem Durchlaufkühler zur Kühlung der komprimierten Kühlluft, der im Kombibetrieb an den Abhitzedampferzeuger angeschlossen ist und
- **Fig. 3**: ausschnittweise eine Anschlusskonfiguration des Durchlaufkühlers aus Fig. 2, die eine Umschaltung zwischen Kombibetrieb und ausschliesslichem Gasturbinen-Betrieb gemäss der Erfindung ermöglicht.

### WEGE ZUR AUSFÜHRUNG DER ERFINDUNG

Die Erfindung stellt ein Konzept und System für ein Kombikraftwerk zur Verfügung, welches eine Umschaltung zwischen zwei Betriebsarten, nämlich zwischen dem herkömmlichen Kombibetrieb mit Gasturbine und Dampfturbine und dem Einfachbetrieb nur mit der Gasturbine, ohne Unterbrechung der Energieerzeugung ermöglicht.

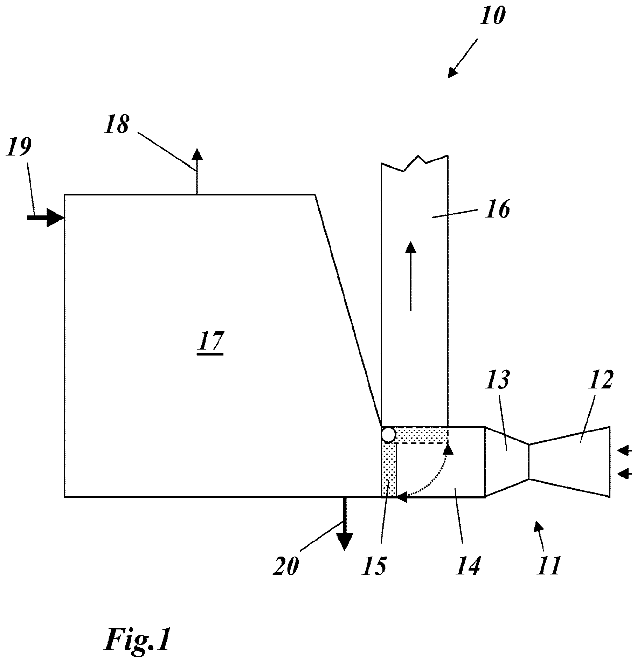

Dazu wird ausgegangen von einer Konfiguration des Kombikraftwerks, wie sie in Fig. 1 wiedergegeben ist. Beim Kombikraftwerk 10 der Fig. 1 ist eine Gasturbine 11 vorgesehen, die mit einem Verdichter 12 Luft ansaugt und verdichtet, die verdichtete Luft zur Verbrennung eines Brennstoffs in einer (nicht gezeigten) Brennkammer einsetzt, und die dabei entstehenden heissen Gase in einer Turbine 13 unter Arbeitsleistung entspannt. Die Turbine 13 treibt üblicherweise den Verdichter 12 und einen (nicht gezeigten) elektrischen Generator an.

Die aus der Turbine 13 austretenden heissen Abgase werden im Kombibetrieb über einen Abgaskanal 14 einem Abhitzedampferzeuger 17 zugeführt, wo sie über einen Speisewassereinlass 19 zugeführtes Speisewasser durch Wärmeaustausch in Dampf verwandeln, der an einem Heissdampfauslass 20 abgegeben wird. Die abgekühlten Abgase verlassen den Abhitzedampferzeuger 17 über einen Abgasauslass 18. Der Abhitzedampferzeuger 17 ist Teil eines (nicht gezeigten) Wasser/Dampf-Kreislaufs mit Dampfturbine, Kondensator, Speisewasserbehälter und Speisewasserpumpe.

Von dem Abgaskanal 14 zweigt vor dem Abhitzedampferzeuger 17 ein Nebenkamin 16 ab. Am Abzweigpunkt ist im Abgaskanal 14 eine Umlenkklappe 15 angeordnet, die zwischen zwei Endstellungen umschaltbar ist. In der einen Endstellung (in Fig. 1 gestrichelt eingezeichnet) lässt sie die Abgase von der Gasturbine zum Abhitzedampferzeuger 17 ungehindert durch und sperrt gleichzeitig den Nebenkamin 16 ab. Diese Endstellung wird beim üblichen Kombibetrieb verwendet. In der anderen Endstellung (in Fig. 1 durchgezogen eingezeichnet) ist die Verbindung zum Abhitzedampferzeuger 17 unterbrochen und die heissen Abgase werden direkt in den Nebenkamin 16 umgelenkt. In diese Endstellung wird die Umlenkklappe 15 umgestellt, wenn vom Kombibetrieb auf den Einfachbetrieb umgeschaltet wird, bei dem ohne Wasser/Dampf-Kreislauf nur die Gasturbine 11 in Betrieb ist und Strom erzeugt.

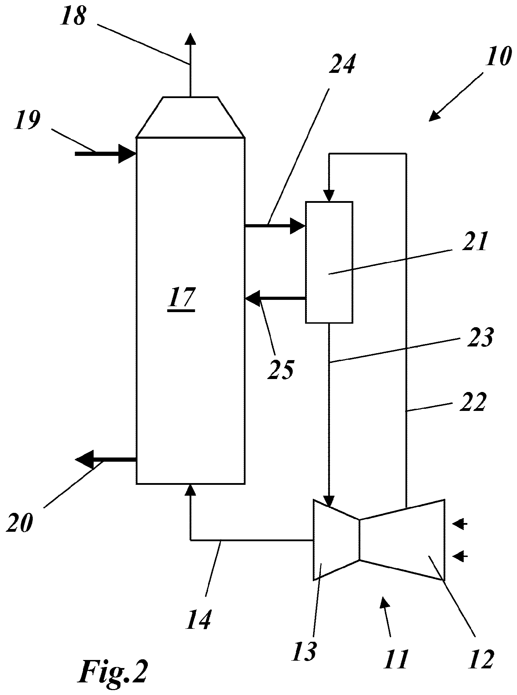

Beim vorliegenden Kombikraftwerk wird weiterhin die Turbine 13 und ggf. auch die Brennkammer mit Luft gekühlt, die dem Kompressor 12 an einer oder mehreren Stellen entnommen und gemäss Fig. 2 über eine Druckluftleitung 22 einem nachfolgenden Durchlaufkühler 21 zugeführt und dort heruntergekühlt wird. Der Durchlaufkühler 21 ist dabei über eine Speisewasserzuleitung 24 und eine Dampfableitung 25 mit dem Abhitzedampferzeuger 17 verbunden. Im Kombibetrieb wird der Abhitzedampferzeuger 17 über den Speisewassereinlass 19 mit kaltem Speisewasser und über den Abgaskanal 14 mit heissen Abgasen aus der Gasturbine 11 versorgt. Durch mehrere Stufen hindurch wird das Speisewasser erhitzt, verdampft und verlässt den Abhitzedampferzeuger 17 über den Heissdampfauslass 20 als überhitzter Dampf. Durch diesen Wärmeaustauschprozess kühlen sich die Abgase ab und verlassen den Abhitzedampferzeuger 17 über den Abgasauslass 18.

Auf halbem Wege, nach den Vorwärmer-Stufen, wird aus dem Abhitzedampferzeuger 17 Speisewasser entnommen und über die Speisewasserzuleitung 24 dem Durchlaufkühler 21 zugeführt, wo es die verdichtete Luft aus der Gasturbine 11 herunterkühlt. Der im Durchlaufkühler 21 erzeugte Dampf strömt über die Dampfableitung 25 zum Abhitzedampferzeuger 17 zurück, während die heruntergekühlte Luft über die Druckluftleitung 23 zu Kühlungszwecken zurück zur Gasturbine 11 geleitet wird.

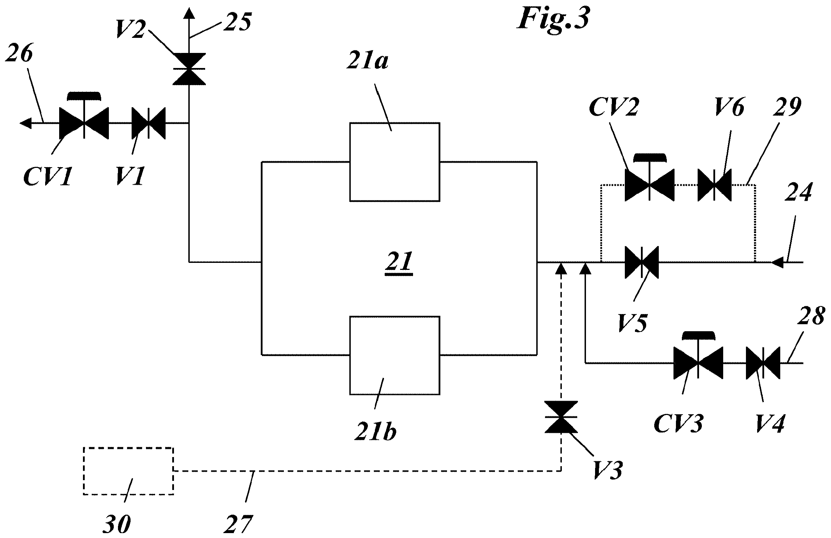

Um in der Konfiguration mit dem Durchlaufkühler 21 und dem Abhitzedampferzeuger 17 eine Umschaltung zwischen Kombibetrieb und Einfachbetrieb ohne Lastabsenkung der Gasturbine zu ermöglichen, ist eine Anordnung gemäss dem Ausführungsbeispiel der Fig. 3 vorgesehen: Zu dem in einen Niederdruck-Durchlaufkühler 21a und einen Hochdruck-Durchlaufkühler 21b unterteilten Durchlaufkühler 21 führt vom Abhitzedampferzeuger 17 die Speisewasserzuleitung 24, in die ein Absperrventil V5 eingebaut ist. Hinter dem Absperrventil V5 mündet eine vom Abhitzedampferzeuger 17 kommende Kaltwassermischleitung 28, in die hintereinander ein Absperrventil V4 und ein Regelventil CV3 zur Regelung der Speisewassertemperatur während des Umschaltens eingebaut sind. Das Absperrventil V5 in der Speisewasserzuleitung 24 ist durch eine Speisewasser-Bypassleitung 29 überbrückbar, in die hintereinander ein Absperrventil V6 und ein Regelventil CV2 zur Gewährleistung einer sanften Änderung des Speisewasserdrucks beim Umschalten vom Einfachbetrieb zum Kombibetrieb eingebaut sind. In die zum Abhitzedampferzeuger 17 führende Dampfableitung 25 ist ein Absperrventil V2 eingefügt. Vor dem Absperrventil V2 zweigt eine Dampfableitung 26 ab, die den Dampf im Einfachbetrieb ableitet, und in die hintereinander ein Absperrventil V1 und ein Regelventil CV1 eingebaut sind.

Im Kombibetrieb (Gasturbine und Dampfturbine) strömt das Speisewasser vom Abhitzedampferzeuger 17 in der Speisewasserzuleitung 24 durch das offene Absperrventil V5 mit hohem Druck in den Durchlaufkühler 21. Der überhitzte Dampf wird über die Dampfableitung 25 und das offene Absperrventil V2 zum überhitzten Teil des Abhitzedampferzeugers 17 zurückgeschickt. Das Absperrventil V1 ist dabei geschlossen.

Im Einfachbetrieb (nur mit der Gasturbine) wird Speisewasser aus einem separaten Ein-Zyklus-Speisewassersystem 30 über die Speisewasserzuleitung 27 bei mittlerem Druck über das Absperrventil V3 eingespeist, welches das Ein-Zyklus-Speisewassersystem 30 vom Speisewassersystem des Abhitzedampferzeugers 17 trennt. Wegen der Korrosion ist es dabei wesentlich, dass das Speisewasser beim Einfachbetrieb mit einer Temperatur von 150°C bereitgestellt wird, die im Vergleich zum Kombibetrieb niedriger ist. Der im Durchlaufkühler 21 erzeuget Dampf strömt über die Dampfableitung 26 ab, wobei die Ventile V1 und CV1 für Umschalt- und Regelzwecke eingesetzt werden.

Die Prozessparameter im Kombibetrieb und im Einfachbetrieb unterscheiden sich sowohl hinsichtlich des Drucks als auch hinsichtlich der Temperatur. Für einen sanften Temperaturübergang beim Umschalten von Kombibetrieb auf Einfachbetrieb ist die Kaltwassermischleitung 28 mit den Ventilen CV3 und V4 vorgesehen. Für eine stufenlose Änderung des Speisewasserdruckes ist die Speisewasser-Bypassleitung 29 mit den Ventilen CV2 und V6 da.

Der im Einfachbetrieb über die Dampfableitung 26 abgegebene Dampf aus dem Durchlaufkühler 21 kann auf unterschiedliche Weise verwendet werden:
- Der Dampf wird entweder in den Nebenkamin 16 abgelassen;
- oder er wird in die zum Durchlaufkühler 21 führende Druckluftleitung 22 injiziert;
- oder er wird einem (in den Figuren nicht gezeigten) luftgekühlten Kondensator zugeführt, um die Verluste an entmineralisiertem Wasser zu minimieren.

Für die Umschaltung vom Kombibetrieb zum Einfachbetrieb bei laufender Stromerzeugung ist zunächst der Nebenkamin 16 mit Umlenkklappe 15 notwendig. Weiterhin ist zu berücksichtigen, dass die Prozessparameter sich bei Einfachbetrieb und Kombibetrieb voneinander unterscheiden. Insbesondere sind die Speisewasser- und Dampfdrücke sowie Speisewasser- und möglicherweise die Dampftemperaturen am Durchlaufkühler im Kombibetrieb am höchsten. Daher müssen beim Umschalten vom Kombibetrieb zum Einfachbetrieb die folgenden Schritte eingehalten werden:
- Um Temperaturänderungen beim Speisewasser zu vermeiden, wird zunächst parallel zu den nachfolgenden Schritten die Umlenkklappe nach und nach geschlossen (in die in Fig. 1 durchgezogen eingezeichnete Endstellung geschwenkt).
- Es wird begonnen, das Absperrventil V2 in der Dampfableitung 25 zum Abhitzedampferzeuger 17 zu schliessen, so dass der Druck vor dem Regelventil CV1 in der anderen Dampfableitung 26 anfänglich gleich dem Druck im Kombibetrieb ist. Wenn das Absperrventil V2 vollständig geschlossen ist, sollte der Druck auf den Solldruck bei Einfachbetrieb eingeschwungen sein.
- Es werden die Ventile V4 und CV3 der Kaltwassermischleitung 28 geöffnet und nach und nach die Speisewassertemperatur mit mässiger Änderungsrate vom Niveau des Kombibetriebs auf das Niveau des Einfachbetriebs abgesenkt, um die Temperatur der Gasturbinen-Kühlluft stabil zu halten.
- Nach und nach werden bei offen gehaltenen Absperrventil V5 die Ventile CV2 und V6 der Speisewasser-Bypassleitung 29 geöffnet.
- Anschliessend wird das Absperrventil V5 geschlossen.
- Dann werden nach und nach gleichzeitig die beiden Regelventile CV2 und CV3 geschlossen und dabei die Speisewassertemperatur auf dem Niveau des Einfachbetriebs gehalten. Das Regelventil CV" wird mit einem gesteuerten Gradienten geschlossen. Zu gleicher Zeit wird das Absperrventil V3 in der Speisewasserzuleitung 27 geöffnet.

Die beschriebene Vorgangsweise ist wichtig, um sicherzustellen, dass das Überschwingen des Druckes und die Unterkühlung im Durchlaufkühler minimal sind.

Insgesamt zeichnet sich die Erfindung durch folgende Charakteristika und Vorteile aus:
1. Ein Kombikraftwerk mit einem oder mehreren Durchlaufkühler(n) für die Gasturbinen-Kühlluft und Nebenkamin mit Umlenkklappe kann vom Kombibetrieb zum Einfachbetrieb umgeschaltet werden, ohne die Last der Gasturbine abzusenken und die Kühllufttemperaturen der Gasturbine instabil werden zu lassen.
2. Das Kombikraftwerk weist dazu folgende Untersysteme auf:
   ∘ Ein Ein-Zyklus-Speisewassersystem für den Einfachbetrieb
   ∘ Ein Dampfsystem zur Ableitung des bei Einfachbetrieb erzeugten Dampfes.
   ∘ Ein Umschaltsystem, das einen sanften Übergang in Druck und Temperatur zwischen Einfachbetrieb und Kombibetrieb ermöglicht.

### BEZUGSZEICHENLISTE

- 10: Kombikraftwerk
- 11: Gasturbine
- 12: Verdichter
- 13: Turbine
- 14: Abgaskanal
- 15: Umlenkklappe
- 16: Nebenkamin
- 17: Abhitzedampferzeuger (HRSG)
- 18: Abgasauslass
- 19: Speisewassereinlass
- 20: Heissdampfauslass
- 21: Durchlaufkühler (OTC)
- 21a: Niederdruck-Durchlaufkühler
- 21b: Hochdruck-Durchlaufkühler
- 22,23: Druckluftleitung
- 24: Speisewasserzuleitung (OTC)
- 25: Dampfableitung (OTC)
- 26: Dampfableitung (SC)
- 27: Speisewasserzuleitung (SC)
- 28: Kaltwassermischleitung
- 29: Speisewasser-Bypassleitung
- 30: Ein-Zyklus-Speisewassersystem
- V1,..,V6: Ventil
- CV1,..,CV3: Regelventil

## Patentansprüche

1. Verfahren zum Betrieb eines Kombikraftwerks (10), welches eine Gasturbine (11) mit einem Verdichter (12) und einer Turbine (13), einen der Gasturbine (11) nachgeschalteten Abhitzedampferzeuger (17) zur Erzeugung von Dampf in einem Wasser/Dampf-Kreislauf, sowie wenigstens einen Durchlaufkühler (21) umfasst, durch welchen im Verdichter (12) komprimierte, zur Kühlung der Gasturbine (11) bestimmte Druckluft strömt und unter Abkühlung aus dem Abhitzedampferzeuger (17) zugeführtes Speisewasser (24) in Dampf umwandelt und an den Abhitzedampferzeuger (17) abgibt, **dadurch gekennzeichnet, dass** das Kombikraftwerk (10) zur Flexibilisierung des Betriebs ohne Lastabsenkung der Gasturbine (11) zwischen einer ersten Betriebsart (Einfachbetrieb), bei der nur der Gasturbinenkreislauf zur Energieerzeugung eingesetzt wird, und einer zweiten Betriebsart (Kombibetrieb), bei der der Gasturbinenkreislauf und der Wasser/Dampf-Kreislauf zur Energieerzeugung eingesetzt werden, umgeschaltet wird, wobei beim Umschalten von der zweiten Betriebsart zur ersten Betriebsart die heissen Abgase aus der Gasturbine (11) sukzessive von dem Abhitzedampferzeuger (17) weg in einen Nebenkamin (16) umgeleitet werden und gleichzeitig die Zufuhr von Speisewasser aus dem Abhitzedampferzeuger (17) zurückgefahren und durch eine anderweitige Zufuhr von Speisewasser ersetzt wird, bzw. umgekehrt, wobei zur anderweitigen Zufuhr von Speisewasser ein separates Ein-Zyklus-Speisewassersystem (30) herangezogen wird und wobei in der Übergangsphase dem Speisewasser mittels einer separaten Kaltwassermischleitung (28) kaltes Wasser zugemischt wird.

2. Verfahren nach dem vorstehenden Anspruch, **dadurch gekennzeichnet, dass** zum Umleiten der heissen Abgase eine in dem von der Gasturbine (11) zum Abhitzedampferzeuger (17) führenden Abgaskanal (14) angeordnete Umlenkklappe (15) betätigt wird.

3. Verfahren nach einem der vorstehenden Ansprüche, **dadurch gekennzeichnet, dass** beim Umschalten von der zweiten Betriebsart zur ersten Betriebsart gleichzeitig die Abgabe von Dampf aus dem Durchlaufkühler (21) an den Abhitzedampferzeuger (17) zurückgefahren und der Dampf anderweitig verwendet wird, bzw. beim Umschalten von der ersten Betriebsart zur zweiten Betriebsart gleichzeitig die Abgabe von Dampf aus dem Durchlaufkühler (21) an den Abhitzedampferzeuger hochgefahren wird.

4. Verfahren nach dem vorstehenden Anspruch, **dadurch gekennzeichnet, dass** der vom Abhitzedampferzeuger (17) abgezogene Dampf in den Nebenkamin (16) abgelassen wird.

5. Verfahren nach Anspruch 3, **dadurch gekennzeichnet, dass** der vom Abhitzedampferzeuger (17) abgezogene Dampf der durch den Durchlaufkühler (21) geführten Druckluft zugemischt wird.

6. Verfahren nach Anspruch 3, **dadurch gekennzeichnet, dass** der vom Abhitzedampferzeuger (17) abgezogene Dampf einem luftgekühlten Kondensator zugeführt wird, um den Verlust an entmineralisiertem Wasser zu minimieren.

7. Verfahren nach einem der vorstehendem Ansprüche, **dadurch gekennzeichnet, dass** die Zufuhr von Speisewasser aus dem Abhitzedampferzeuger (17) mittels eines in einer Speisewasser-Bypassleitung (29) angeordneten Regelventils (CV2) zurückgefahren wird, nachdem die Versorgung des Durchlaufkühlers (21) mit dem Speisewasser auf die Speisewasser-Bypassleitung (29) umgeschaltet worden ist, bzw. umgekehrt.

8. Kombikraftwerk zur Durchführung des Verfahrens nach Anspruch 1, umfassend eine Gasturbine (11) mit einem Verdichter (12) und einer Turbine (13), einen der Gasturbine (11) nachgeschalteten Abhitzedampferzeuger (17) zur Erzeugung von Dampf in einem Wasser/Dampf-Kreislauf, sowie einen Durchlaufkühler (21), durch welchen im Verdichter (12) komprimierte, zur Kühlung der Gasturbine (11) bestimmte Druckluft strömt und unter Abkühlung aus dem Abhitzedampferzeuger (17) über eine erste Speisewasserzuleitung (24) zugeführtes Speisewasser in Dampf umwandelt und über eine erste Dampfableitung (25) an den Abhitzedampferzeuger (17) abgibt, wobei die heissen Abgase der Gasturbine (11) über einen Abgaskanal (14) zum Abhitzedampferzeuger (17) geführt werden, wobei vom Abgaskanal (14) ein Nebenkamin (16) abzweigt, und wobei Mittel zum Zurückfahren der Zufuhr von Speisewasser aus dem Abhitzedampferzeuger und zur anderweitigen Zufuhr von Speisewasser zum Durchlaufkühler sowie eine Kaltwassermischleitung (28) zur Zufuhr von kaltem Wasser zum Speisewasser angeordnet sind, wobei die Mittel zur anderweitigen Zufuhr von Speisewasser zum Durchlaufkühler ein Ein-Zyklus-Speisewassersystem (30) umfassen.

9. Kombikraftwerk nach Anspruch 8, **dadurch gekennzeichnet, dass** zum Umleiten der heissen Abgase vom Abhitzedampferzeuger (17) zum Nebenkamin (16) im Abgaskanal (14) eine Umlenkklappe (15) angeordnet ist.

10. Kombikraftwerk nach Anspruch 8 oder 9, **dadurch gekennzeichnet, dass** in der ersten Dampfableitung (25) ein erstes Absperrventil (V2) angeordnet ist, und dass von der ersten Dampfableitung (25) vor dem ersten Absperrventil (V2) eine für eine erste Betriebsart vorgesehene zweite Dampfableitung (26) abzweigt.

11. Kombikraftwerk nach dem vorstehenden Anspruch, **dadurch gekennzeichnet, dass** in der zweiten Dampfableitung (26) hintereinander ein zweites Absperrventil (V1) und ein erstes Regelventil (CV1) angeordnet sind.

12. Kombikraftwerk nach einem der Ansprüche 8 bis 11, **dadurch gekennzeichnet, dass** in der ersten Speisewasserzuleitung (24) ein drittes Absperrventil (V5) angeordnet ist, und dass zur Umgehung des dritten Absperrventils (V5) eine Speisewasser-Bypassleitung (29) vorgesehen ist, in der hintereinander ein viertes Absperrventil (V6) und ein zweites Regelventil (CV2) angeordnet sind.

13. Kombikraftwerk nach dem vorstehenden Anspruch, **dadurch gekennzeichnet, dass** in die erste Speisewasserleitung (24) zwischen der Speisewasser-Bypassleitung (29) und dem Durchflusskühler (21) die Kaltwassermischleitung (28) einmündet.

14. Kombikraftwerk nach dem vorstehenden Anspruch, **dadurch gekennzeichnet, dass** in der Kaltwassermischleitung (28) hintereinander ein fünftes Absperrventil (V4) und ein drittes Regelventil (CV3) angeordnet sind.

15. Kombikraftwerk nach Anspruch 12, **dadurch gekennzeichnet, dass** in die erste Speisewasserleitung (24) zwischen der Speisewasser-Bypassleitung (29) und dem Durchflusskühler (21) eine von dem separaten Ein-Zyklus-Speisewassersystem (30) kommende zweite Speisewasserleitung (27) einmündet.

16. Kombikraftwerk nach Anspruch 15, **dadurch gekennzeichnet, dass** in der zweiten Speisewasserleitung (27) ein sechstes Absperrventil (V3) angeordnet ist.

## Claims

1. Method for operating a combined cycle power plant (10) which comprises a gas turbine (11) having a compressor (12) and a turbine (13); a waste heat steam generator (17) connected downstream of the gas turbine (11) for generating steam in a water/steam circuit; and at least one continuous cooler (21) through which flows compressed air, compressed in the compressor (12), intended for cooling the gas turbine (11), and which converts feed water (24) supplied from the waste heat steam generator (17) during cooling into steam and releases said steam to the waste heat steam generator (17); **characterized in that** the combined cycle power plant (10), to make operation flexible without decreasing the load of the gas turbine (11), is switched between a first operating mode (single mode), in which only the gas turbine circuit is used for power generation, and a second operating mode (combined operation), in which the gas turbine circuit and the water/steam circuit are used for power generation; wherein, upon switching from the second operating mode to the first operating mode, the hot exhaust gases from the gas turbine (11) are successively diverted away from the waste heat steam generator (17) into a secondary chimney (16), and the supply of feed water from the waste heat steam generator (17) is simultaneously reversed and replaced by another supply of feed water, or vice versa; wherein a separate single-cycle feed water system (30) is used for the other supply of feed water; and wherein, in the transition phase, cold water is admixed with the feed water by means of a separate cold water mixing (28) line.

2. Method according to the preceding claim, **characterized in that** a deflection flap (15), arranged in the exhaust gas conduit (14) leading from the gas turbine (11) to the waste heat steam generator (17), is actuated to divert the hot exhaust gases.

3. Method according to any of the preceding claims, **characterized in that,** upon switching from the second operating mode to the first operating mode, the delivery of steam from the continuous cooler (21) to the waste heat steam generator (17) is simultaneously reversed, and the steam is used in other ways; or, upon switching from the first operating mode to the second operating mode, the delivery of steam from the continuous cooler (21) to the waste heat steam generator is simultaneously started up.

4. Method according to the preceding claim, **characterized in that** the steam removed from the waste heat steam generator (17) is discharged into the secondary chimney (16).

5. Method according to claim 3, **characterized in that** the steam removed from the waste heat steam generator (17) is admixed with the compressed air guided through the continuous cooler (21).

6. Method according to claim 3, **characterized in that** the steam removed from the waste heat steam generator (17) is supplied to an air-cooled condenser in order to minimize the loss of demineralized water.

7. Method according to any one of the preceding claims, **characterized in that** the supply of feed water from the waste heat steam generator (17) is reversed, by means of a control valve (CV2) arranged in a feed water bypass line (29), after the supply of the continuous cooler (21) with the feed water has been switched to the feed water bypass line (29), or vice versa.

8. A combined cycle power plant for implementing the method according to claim 1, comprising a gas turbine (11) having a compressor (12) and a turbine (13); a waste heat steam generator (17), downstream of the gas turbine (11), for generating steam in a water/steam circuit; and a continuous cooler (21) through which flows compressed air, compressed in the compressor (12), intended for cooling the gas turbine (11), and which converts feed water supplied via a feed water feed line (24) from the waste heat steam generator (17) during cooling into steam, and releases said steam to the waste heat steam generator (17) via a first steam discharge line (25); wherein the hot exhaust gases of the gas turbine (11) are guided via an exhaust gas conduit (14) to the waste heat steam generator (17); wherein a secondary chimney (16) branches off from the exhaust gas conduit (14); and wherein means are arranged for reversing the supply of feed water from the waste heat steam generator and for otherwise supplying feed water to the continuous cooler, as well as a cold water mixing line (28) for supplying cold water to the feed water; wherein the means for otherwise supplying feed water to the continuous cooler comprise a single cycle feed water system (30).

9. Combined cycle power plant according to claim 8, **characterized in that** a deflection flap (15) for diverting the hot exhaust gases from the waste heat steam generator (17) to the secondary chimney (16) is arranged in the exhaust gas conduit (14).

10. Combined cycle power plant according to claim 8 or 9, **characterized in that** a first shut-off valve (V2) is arranged in the first steam discharge line (25), **and in that** a second steam discharge line (26), provided for a first operating mode, branches off from the first steam discharge line (25) before the first shut-off valve (V2).

11. Combined cycle power plant according to the preceding claim, **characterized in that** a second shut-off valve (V1) and a first regulating valve (CV1) are arranged in succession in the second steam discharge line (26).

12. Combined cycle power plant according to any one of claims 8 to 11, **characterized in that** a third shut-off valve (V5) is arranged in the first feed water supply line (24), **and in that** a feed water bypass line (29), in which a fourth shut-off valve (V6) and a second regulating valve (CV2) are arranged in succession, is provided in order to bypass the third shut-off valve (V5).

13. Combined cycle power plant according to the preceding claim, **characterized in that** the cold water mixing line (28) opens into the first feed water line (24) between the feed water bypass line (29) and the continuous cooler (21).

14. Combined cycle power plant according to the preceding claim, **characterized in that** a fifth shut-off valve (V4) and a third regulating valve (CV3) are arranged in succession in the cold water mixing line (28).

15. Combined cycle power plant according to claim 12, **characterized in that** a second feed water line (27), coming from the separate single cycle feed water system (30), opens into the first feed water line (24) between the feed water bypass line (29) and the continuous cooler (21).

16. Combined cycle power plant according to claim 15, **characterized in that** a sixth shut-off valve (V3) is arranged in the second feed water line (27).

## Revendications

1. Procédé de fonctionnement d'une centrale à cycle combiné (10), qui comprend une turbine à gaz (11) avec un compresseur (12) et une turbine (13), une chaudière de récupération (17) en aval de la turbine à gaz (11) pour la production de vapeur dans un circuit eau-vapeur, ainsi qu'au moins un refroidisseur à circulation (21), à travers lequel circule de l'air comprimé, qui a été comprimé dans le compresseur (12), destiné au refroidissement de la turbine à gaz (11) et, par le refroidissement, de l'eau d'alimentation (24) guidée hors de la chaudière de récupération (17) est transformée en vapeur et débouche au niveau de la chaudière de récupération (17), **caractérisé en ce que** la centrale à cycle combiné (10), pour rendre plus flexible le fonctionnement sans réduction de la charge de la turbine à gaz (11), est commutée entre un premier mode de fonctionnement (fonctionnement simple), dans lequel seul le circuit de turbine à gaz est utilisé pour la production d'énergie, et un second mode de fonctionnement (fonctionnement combiné), dans lequel le circuit de turbine à gaz et le circuit eau-vapeur sont utilisés pour la production d'énergie, dans lequel lors d'une commutation du second mode de fonctionnement au premier mode de fonctionnement, les gaz d'échappement chauds provenant de la turbine à gaz (11) sont redirigés successivement depuis la chaudière de récupération (17) à l'écart dans une cheminée secondaire (16) et en même temps l'apport en eau d'alimentation provenant de la chaudière de récupération (17) est réduit et remplacé par un autre apport en eau d'alimentation, ou inversement, dans lequel pour l'autre apport en eau d'alimentation, un système d'eau d'alimentation à cycle unique (30) séparé est utilisé et dans lequel, dans la phase de transition, l'eau d'alimentation est mélangée à de l'eau froide au moyen d'une conduite de mélange d'eau froide (28) séparée.

2. Procédé selon la revendication précédente, **caractérisé en ce que,** pour la redirection des gaz d'échappement chauds, un clapet de déviation (15) agencé dans le canal de gaz d'échappement (14) menant de la turbine à gaz (11) à la chaudière de récupération (17) est actionné.

3. Procédé selon l'une quelconque des revendications précédentes, **caractérisé en ce que,** lors de la commutation du second mode de fonctionnement au premier mode de fonctionnement, simultanément l'arrivée de la vapeur provenant du refroidisseur à circulation (21) vers la chaudière de récupération (17) est réduite et la valeur est utilisée ailleurs ou, lors de la commutation du premier mode de fonctionnement au second mode de fonctionnement, simultanément l'arrivée de la vapeur provenant du refroidisseur à circulation (21) vers la chaudière de récupération est augmentée.

4. Procédé selon la revendication précédente, **caractérisé en ce que** la vapeur retirée de la chaudière de récupération (17) est évacuée dans la cheminée secondaire (16).

5. Procédé selon la revendication 3, **caractérisé en ce que** la vapeur retirée de la chaudière de récupération (17) est mélangée à l'air comprimé guidé à travers le refroidisseur à circulation (21).

6. Procédé selon la revendication 3, **caractérisé en ce que** la vapeur retirée de la chaudière de récupération (17) est guidée vers un condenseur refroidi à l'air, afin de réduire au minimum les pertes en eau déminéralisée.

7. Procédé selon l'une quelconque des revendications précédentes, **caractérisé en ce que** l'apport en eau d'alimentation provenant de la chaudière de récupération (17) est réduit au moyen d'une soupape de régulation (CV2) agencée dans une conduite de dérivation d'eau d'alimentation (29), après que l'alimentation du refroidisseur à circulation (21) avec l'eau d'alimentation a été commutée sur la conduite de dérivation d'eau d'alimentation (29) ou inversement.

8. Centrale à cycle combiné pour la mise en oeuvre du procédé selon la revendication 1, comprenant une turbine à gaz (11) avec un compresseur (12) et une turbine (13), une chaudière de récupération (17) en aval de la turbine à gaz (11) pour la production de vapeur dans un circuit eau-vapeur, ainsi qu'un refroidisseur à circulation (21), à travers lequel de l'air comprimé, qui a été comprimé dans le compresseur (12), destiné au refroidissement de la turbine à gaz (11) circule et, lors du refroidissement, de l'eau d'alimentation provenant de la chaudière de récupération (17) guidée par le biais d'une première conduite d'eau d'alimentation (24) est transformée en vapeur et débouche par le biais d'une première évacuation de vapeur (25) au niveau de la chaudière de récupération (17), dans laquelle les gaz d'échappement chauds de la turbine à gaz (11) sont guidés par le biais d'un canal de gaz d'échappement (14) vers la chaudière de récupération (17), dans laquelle une cheminée secondaire (16) est détournée du canal de gaz d'échappement (14) et dans laquelle des moyens de réduction de l'apport en eau d'alimentation depuis la chaudière de récupération et pour un autre apport en eau d'alimentation vers le refroidisseur à circulation ainsi qu'une conduite de mélange d'eau froide (28) pour l'apport en eau froide à l'eau d'alimentation sont agencés, dans laquelle les moyens pour l'autre apport en eau d'alimentation au refroidisseur à circulation comprennent un système d'eau d'alimentation à cycle unique (30).

9. Centrale à cycle combiné selon la revendication 8, **caractérisée en ce que,** pour la déviation des gaz d'échappement chauds de la chaudière de récupération (17) vers la cheminée secondaire (16), un clapet de déviation (15) est agencé dans le canal de gaz d'échappement (14).

10. Centrale à cycle combiné selon la revendication 8 ou 9,
**caractérisée en ce que** dans la première évacuation de vapeur (25), une première soupape d'arrêt (V2) est agencée **et en ce que** de la première évacuation de vapeur (25) avant la première soupape d'arrêt (V2), une seconde évacuation de vapeur (26) est dérivée, prévue pour un premier mode de fonctionnement.

11. Centrale à cycle combiné selon la revendication précédente, **caractérisée en ce que** dans la seconde évacuation de vapeur (26) une deuxième soupape d'arrêt (V1) et une première soupape de régulation (CV1) sont agencées l'une derrière l'autre.

12. Centrale à cycle combiné selon l'une quelconque des revendications 8 à 11, **caractérisée en ce que** dans la première conduite d'eau d'alimentation (24) une troisième soupape d'arrêt (V5) est agencée **et en ce que** pour la déviation de la troisième soupape d'arrêt (V5) une conduite de dérivation d'eau d'alimentation (29) est prévue, dans laquelle sont agencées l'une derrière l'autre une quatrième soupape d'arrêt (V6) et une deuxième soupape de régulation (CV2).

13. Centrale à cycle combiné selon la revendication précédente, **caractérisée en ce que** la conduite de mélange d'eau froide (28) débouche dans la première conduite d'eau d'alimentation (24), entre la conduite de dérivation d'eau d'alimentation (29) et le refroidisseur à circulation (21).

14. Centrale à cycle combiné selon la revendication précédente, **caractérisée en ce que** dans la conduite de mélange d'eau froide (28) une cinquième soupape d'arrêt (V4) et une troisième soupape de régulation (CV3) sont agencées l'une derrière l'autre.

15. Centrale à cycle combiné selon la revendication 12,
**caractérisée en ce qu'**une seconde conduite d'eau d'alimentation (27) provenant du système d'eau d'alimentation à cycle unique (30) séparé débouche dans la première conduite d'eau d'alimentation (24) entre la conduite de dérivation d'eau d'alimentation (29) et le refroidisseur à circulation (21).

16. Centrale à cycle combiné selon la revendication 15,
**caractérisée en ce qu'**une sixième soupape d'arrêt (V3) est agencée dans la seconde conduite d'eau d'alimentation (27).
